# EUROPÄISCHE PATENTANMELDUNG

(11) **EP 4 778 393 A1**
(43) Veröffentlichungstag der Anmeldung: **22.07.2026**
(21) Anmeldenummer: 25152329.6
(22) Anmeldetag: 16.01.2025
(51) Int. Cl.: A21B 5/02

(54) **ANORDNUNG, BACKOFEN UND VERFAHREN ZUR HERSTELLUNG VON WAFFELN**

(71) Anmelder: Bühler Wafer Solutions GmbH, 2100 Leobendorf (AT)
(72) Erfinder: Kalss, Georg, 1080 Wien (AT); Miller, Karl, 2325 Velm (AT); Steinböck, Michael, 3042 Holzleiten (AT)
(74) Vertreter: Puchberger & Partner Patentanwälte

(57) **Zusammenfassung**

Verfahren, Anordnung und Backofen zur Herstellung von Waffeln in beheizten und an einem Endlosförderer (20) durch den Backofen beförderten Überdruckbackformen (2), umfassend:
- eine Backplatte (3), die auf einer ihrer Seiten eine Backfläche (4) zur Begrenzung einer der Überdruckbackformen und auf ihrer gegenüberliegenden Seite eine Rückenfläche (5) aufweist,
- und eine Induktionsheizung (6) mit einem Heizmodul zur Beheizung einer vorbeifahrenden Backplatte (3) über ihre Rückenfläche (5),
- wobei die Rückenfläche (5) der Backplatte (3) ein von einer Ebene abweichendes Profil (8) aufweist,
- wobei die Induktionsheizung (6) eine an diese Rückenfläche (5) angepasste, dem Verlauf des Profils (8) folgende, nichtlineare Kontur (7) aufweist und insbesondere nachbildet,
- und wobei das Profil (8) und die Kontur (7) derart ausgestaltet sind, dass zwischen der vorbeifahrenden Rückenfläche (5) der Backplatte (3) und der Induktionsheizung (6) ein Induktorspalt (10) mit konstantem Spaltabstand (26) freigehalten ist.

## Beschreibung

Die Erfindung betrifft eine Anordnung, ein Verfahren und einen Backofen gemäß den Merkmalen der unabhängigen Patentansprüche.

Insbesondere betrifft die Erfindung das technische Gebiet von Backöfen zur industriellen Herstellung von Waffelprodukten, bei denen eine im Wesentlichen flüssige Backmasse, die im unausgebackenen Zustand etwa 45-70% Wasser enthält, zwischen zwei Backplatten unter Überdruck zu einem Waffelblatt ausgebacken wird. Die dadurch hergestellten Waffeln sind insbesondere Waffelzwischenprodukte, die als Flachwaffeln oder Hohlwaffeln bekannt sind.

Dabei kommen spezielle Backöfen zu Einsatz, bei denen entlang eines Endlosförderers auf- und zuklappbare Backplattenvorrichtungen, insbesondere Backzangen, vorgesehen sind, die in ihrer zugeklappten Stellung jeweils eine Backform bilden. Die Backplattenvorrichtungen werden entlang des Endlosförderers kontinuierlich durch den Backofen gefördert und dabei wird auf jeweils eine aufgeklappte Backplattenvorrichtung eine flüssige Backmasse aufgetragen. In weiterer Folge werden die Backplattenvorrichtungen geschlossen, verriegelt und in einen heißen Backbereich befördert. In weiterer Folge wird das Backprodukt in der geschlossenen Backplattenvorrichtung ausgebacken. Anschließend wird die geschlossene Backplattenvorrichtung geöffnet, sodass das Backprodukt entnommen werden kann. In weiterer Folge beginnt der Zyklus von neuem.

Bei der Herstellung derartiger Flachwaffeln oder Hohlwaffeln wird eine flüssige Backmasse mit einem Wasseranteil von etwa 50-70% unter hohem Druck ausgebacken. Die flüssige Backmasse wird in der Regel von einem sogenannten Aufgießer streifenförmig aufgegossen und die Backplattenvorrichtung wird geschlossen. Dabei wird die flüssige Backmasse schlagartig erhitzt. Das Wasser der Backmasse entweicht in Form von Wasserdampf sehr rasch und hinterlässt dabei eine poröse, spröde Struktur. Bei einem üblichen Waffelblatt im Format 350 x 500 mm werden hierbei mehr als 50 Liter Wasserdampf freigesetzt.

Ein weiterer Effekt dieser Backtechnologie ist, dass sich die flüssige Backmasse durch die schlagartige Verdampfung des Wasseranteils entlang der gesamten Backform ausbreitet und verteilt. Das fertige Produkt weist dann z.B. eine Dicke von etwa 0,5 bis 2 mm und eine exakte, in der Regel rechteckige, Form auf. Dabei soll das Waffelblatt nicht nur die exakte vorbestimmte Form, Dicke und Struktur aufweisen, sondern sie muss auch noch einen homogenen Ausbackgrad haben.

Zur Verbesserung der Effizienz derartiger Backöfen kann eine herkömmliche Gasbeheizung durch eine elektrische Heizung, insbesondere durch eine Induktionsheizung, ersetzt werden. Die dazu bekannten Konstruktionen umfassen im Wesentlichen geradlinig verlaufende Induktionsheizmodule, die über einen Induktorspalt auf die vorbeifahrenden Backplatten wirken, um diese induktiv aufzuheizen. Die dabei erzielbare induktive Beheizung der Backplatten ist stark von dem Spaltabstand des Induktorspalts abhängig. Je näher der Induktor an der Rückenfläche der vorbeifahrenden Backplatte positioniert ist, also je kleiner der Spaltabstand des Induktorspalts ausgebildet ist, desto effizienter kann die Heizung der Backplatte erfolgen. Hierbei ist jedoch nicht nur der Abstand als solcher wichtig, sondern auch der konstante Spaltabstand über den Verlauf des Induktorspalts. So können Veränderungen des Spaltabstandes im Verlauf des Induktorspalts zu unterschiedlich stark beheizten Bereichen führen, was zu ungleichmäßigen Backergebnissen und folglich zu Ausschuss führt. Dies verringert die Effizienz des Backofens.

Aus diesem Grund wird bei herkömmlichen, gattungsgemäßen Backöfen die Rückenfläche der Backplatten ebenenförmig und so glatt wie möglich ausgebildet. Die Ausgestaltung der Rückenfläche der Backplatten in Form einer Ebene ermöglicht es, den Induktorspalt zwischen der Induktionsheizung und den vorbeifahrenden Backplatten klein und konstant einzustellen, was für die Effizienz der induktiven Beheizung bisher als optimal galt.

Grundsätzlich zeichnen sich induktiv beheizte Waffelbacköfen im Vergleich zu Waffelbacköfen mit konventioneller Gasheizung durch Backplatten mit höherer Masse aus, da zur Realisierung eines hohen Wirkungsgrades der elektrischen Induktion die Rückseiten der Backplatten glatt und insbesondere nicht, wie aus gasbeheizten Waffelöfen bekannt, gerippt ausgeführt werden. Dies resultiert in einem gegenüber Backplatten für gasbeheizte Waffelöfen signifikant höherem Energieinhalt der Backplatten und somit einem für das Erreichen der gewünschten Backflächentemperatur erhöhten Energiebedarf.

Überraschend wurde nun aber festgestellt, dass es für die Effizienz eines gattungsgemäßen Backofens bei gewissen Betriebsweisen vorteilhaft sein kann, wenn die Rückenflächen der Backplatten nicht ebenenförmig ausgebildet sind.

Für gattungsgemäße Backöfen gibt es in der Praxis unterschiedliche Betriebsarten. Manche Backöfen werden durchgehend über mehrere Wochen und Monate betrieben, wobei kontinuierlich immer dasselbe Produkt hergestellt wird. Andere Backöfen werden in kürzeren Intervallen betrieben, weil beispielsweise in regelmäßigen Abständen ein Produktwechsel und damit auch ein Wechsel der Backplatten erfolgt oder weil schlichtweg ein 24-Stunden-Betrieb nicht notwendig ist. Manche Backöfen werden zur Herstellung von komplex ausgeformten Hohlwaffeln verwendet, andere wiederum für Waffeln mit unterschiedlichen Waffelblattdicken.

Überraschend hat sich bei Versuchen herausgestellt, dass durch eine geeignete Wahl des Profils der Rückenfläche eine Verbesserung der Effizienz des Backofens für unterschiedliche Anwendungen erfolgen kann.

Für konstant laufende Waffelbacköfen ist es beispielsweise vorteilhaft, wenn die thermische Speicherfähigkeit der Backplatten im Mittenbereich größer ist als im Randbereich, da schließlich in diesem Bereich die flüssige und relativ kühle Backmasse aufgegossen wird. In der Aufheizphase, also zur Einstellung eines thermischen Gleichgewichts beim Backprozess, tritt ein Effekt auf, dass durch die an den Backplatten angreifenden Verbindungsmittel, insbesondere Scharniere und Verriegelungsvorrichtungen, die Ränder der Backplatten über längere Dauer nicht die gewünschte Temperatur erzielen. Um den Aufheizprozess zu beschleunigen, ist es aber zur Verbesserung der Effizienz vorteilhaft, wenn die Ränder der Backplatten so schnell wie möglich auf dieselbe Temperatur wie den Mittelbereich erhitzt werden, um so rasch wie möglich das thermische Gleichgewicht im Backprozess herstellen zu können.

Folglich kann es vorteilhaft sein, lokale Steigerungen der thermischen Reaktivität oder lokale Steigerungen der thermischen Speicherfähigkeit auf der Backfläche bei induktiv beheizten Waffelbacköfen zu bewirken. In der Regel resultieren Bereiche mit reduzierter Backplattendicke in einer gesteigerten thermischen Reaktivität und Bereiche mit größerer Backplattendicke in einer gesteigerten thermischen Speichermasse.

Bei induktiver Beheizung eines Waffelbackofens erfolgt der Energieeintrag von der Induktionsheizung, insbesondere deren Induktor, in den Ofen primär durch die Induktion in die Rückenfläche der Backplatte. Im Gegensatz dazu erfolgt bei gasbeheizten Waffelbacköfen ein Teil des Energieeintrags auch durch Konvektion direkt in den Ofenkörper. Deshalb ist das Erreichen des thermischen Gleichgewichts nach dem Ofen-Start zwischen Backplatten und dem restlichen Ofen bei induktiv beheizten Waffelöfen gegenüber gasbeheizten Öfen gegebenenfalls verlängert, was zu stärkeren Schwankungen in der Waffelblattqualität zu Beginn des Backprozesses führt.

Bei konventionellen Backplatten ist aufgrund der gleichmäßigen Backplattendicke eine heterogene Temperaturverteilung auf der Backfläche, wie sie z.B. beim gleichzeitigen Backen mehrerer vereinzelter Produkte auf einer Backplatte vorteilhaft wäre, nur in sehr begrenztem Ausmaß realisierbar.

Während herkömmliche induktiv beheizte Backöfen mit glatter Rückenfläche zur Optimierung eines rein stationär betrachteten Prozesses ausgelegt sind, soll die vorliegende Erfindung eine weitere Effizienzsteigerung dadurch erzielen, dass auch transiente Prozesse, wie beispielsweise Aufheiz- oder Abkühlphasen während des Normalbetriebs berücksichtigt werden.

Aufgabe der Erfindung ist es somit, die Nachteile des Standes der Technik zu überwinden.

Die erfindungsgemäße Aufgabe wird insbesondere durch die Merkmale der unabhängigen Patentansprüche gelöst.

Offenbart wird eine Anordnung, insbesondere ein Nachrüstsatz, für einen Backofen zur Herstellung von Waffeln in beheizten und an einem Endlosförderer entlang einer Bewegungsrichtung durch den Backofen beförderten Überdruckbackformen, umfassend:
- mindestens eine Backplatte, die auf einer ihrer Seiten eine Backfläche zur Begrenzung einer der Überdruckbackformen und auf ihrer gegenüberliegenden Seite eine Rückenfläche aufweist,
- und eine Induktionsheizung zur Beheizung einer vorbeifahrenden Backplatte über ihre Rückenfläche,

Bevorzugt ist vorgesehen, dass die Rückenfläche der Backplatte ein von einer Ebene abweichendes Profil aufweist.

Bevorzugt ist vorgesehen, dass die Induktionsheizung eine an diese Rückenfläche angepasste, dem Verlauf des Profils folgende, nichtlineare Kontur aufweist.

Gegebenenfalls ist vorgesehen, dass an der Backplatte eine Hauptachse definiert ist, die der Bewegungsrichtung der Backform durch den Backofen entspricht, und dass das Profil der Rückenfläche der Backplatte in einer Normalebene dieser Hauptachse liegt.

Gegebenenfalls ist vorgesehen, dass das Profil der Rückenfläche der Backplatte im Verlauf der Backplatte entlang der Hauptachse konstant ist.

Gegebenenfalls ist vorgesehen, dass das Profil der Rückenfläche der Backplatte und die Kontur der Induktionsheizung derart ausgestaltet sind, dass, im eingebauten Zustand, zwischen der vorbeifahrenden Rückenfläche der Backplatte und der Induktionsheizung ein Induktorspalt mit konstantem Spaltabstand freigehalten ist.

Bevorzugt hat der Induktorspalt einen nichtlinearen Verlauf.

Es kann vorteilhaft sein, wenn die Rückenfläche der Backplatte ein sägezahnförmiges Profil aufweist.

Es kann vorteilhaft sein, wenn die Rückenfläche der Backplatte ein abgestuftes Profil aufweist.

Es kann vorteilhaft sein, wenn die Rückenfläche der Backplatte ein wannenförmiges Profil aufweist

Es kann vorteilhaft sein, wenn die Rückenfläche der Backplatte ein aufgewölbtes Profil aufweist.

Es kann vorteilhaft sein, wenn die Rückenfläche der Backplatte ein wellenförmiges Profil aufweist.

Es kann vorteilhaft sein, wenn die Dicke der Backplatte, definiert durch den Abstand zwischen Rückenfläche und der äußeren Abschlussebene der Backfläche, in einem ersten Bereich größer ausgebildet ist als in einem zweiten Bereich der Backplatte.

Es kann vorteilhaft sein, wenn die Kontur der Induktionsheizung an diesen Dickenunterschied angepasst ist.

Es kann vorteilhaft sein, wenn die Induktionsheizung derart ausgestaltet ist, dass sie, im eingebauten Zustand, die Rückenfläche der vorbeifahrenden Backplatte sowohl im ersten Bereich als auch im zweiten Bereich beheizt.

Gegebenenfalls ist vorgesehen, dass ein erster Bereich im Randbereich vorgesehen ist, womit die Backplatte im Randbereich dicker ausgebildet ist als im Mittenbereich.

Gegebenenfalls ist vorgesehen, dass ein erster Bereich im Mittenbereich vorgesehen ist, womit die Backplatte im Mittenbereich dicker ausgebildet ist als im Randbereich.

Gegebenenfalls ist vorgesehen, dass die Backplatte als selbsttragende Backplatte ausgebildet ist, die in ihren seitlichen Endabschnitten Aufnahmen zur Montage von Verbindungsmitteln wie beispielsweise für ein Scharnier oder für eine Verriegelungsvorrichtung aufweist.

Die Backplatte und insbesondere auch die Backplattenvorrichtung sind bevorzugt rahmenlos ausgebildet.

Gegebenenfalls ist vorgesehen, dass die Backplatte eine Spannvorrichtung zur Vorspannung der Backplatte gegen die von der Überdruckbackform ausgehenden Druckkräfte umfasst.

Offenbart wird eine Anordnung, die als Nachrüstsatz für einen Backofen zur Herstellung von Waffeln in beheizten und an einem Endlosförderer durch den Backofen beförderten Überdruckbackformen ausgebildet ist, wobei der Nachrüstsatz zum Ersatz mindestens einer Backplatte und mindestens einer Induktionsheizung ausgebildet ist.

Offenbart wird ein Backofen zur Herstellung von Waffeln.

Bevorzugt sind mehrere Backplattenvorrichtungen vorgesehen, die jeweils ein Paar von Backplatten zur Bildung einer Überdruckbackform aufweisen.

Bevorzugt ist vorgesehen, dass die Backplatten jeweils auf einer ihrer Seiten eine Backfläche zur Begrenzung der Überdruckbackform und auf ihrer gegenüberliegenden Seite eine Rückenfläche aufweisen.

Bevorzugt ist mindestens ein Endlosförderer vorgesehen, der die Backplattenvorrichtungen durch den Backofen befördert.

Bevorzugt ist eine Induktionsheizung zur Beheizung der Rückenfläche der vorbeifahrenden Backplatten vorgesehen.

Bevorzugt ist vorgesehen, dass die Backplatten und die Induktionsheizung als beschriebene Anordnung ausgebildet sind.

Bevorzugt ist vorgesehen, dass der Backofen einen, mehrere oder alle der folgenden Merkmale aufweist:
- einen Backmassenauftragsbereich zum Auftrag einer Backmasse auf eine geöffnete Backplattenvorrichtung,
- einen Schließbereich zum Schließen der Backplattenvorrichtung,
- einen Backraum zum Backen der Waffeln in den geschlossenen Backplattenvorrichtungen, in dem mindestens eine Induktionsheizung zur Beheizung der im Backraum befindlichen Backplattenvorrichtungen vorgesehen ist,
- einen Öffenbereich zum Öffnen der Backplattenvorrichtungen,
- und einen Waffelentnahmebereich zur Entnahme der gebackenen Waffeln aus den geöffneten Backplattenvorrichtungen.

Offenbart wird ein Verfahren zur Herstellung von Waffeln mit einer beschriebenen Anordnung und insbesondere in einem beschriebenen Backofen zur Herstellung von Waffeln in beheizten und an einem Endlosförderer entlang einer Bewegungsrichtung durch den Backofen beförderten Überdruckbackformen:
- wobei eine Induktionsheizung mit mindestens einem Heizmodul eine vorbeifahrende Backplatte beheizt,
- wobei die Backplatte auf einer ihrer Seiten eine Backfläche zur Begrenzung einer der Überdruckbackformen und auf ihrer gegenüberliegenden Seite eine Rückenfläche aufweist,
- wobei die Backplatte von der Induktionsheizung über ihre Rückenfläche beheizt wird.

Bevorzugt ist vorgesehen, dass die induktive Beheizung über eine Rückenfläche der Backplatte erfolgt, die ein von einer Ebene abweichendes Profil aufweist.

Bevorzugt ist vorgesehen, dass die induktive Beheizung über eine Induktionsheizung erfolgt, die eine an diese Rückenfläche angepasste, dem Verlauf des Profils folgende, nichtlineare Kontur aufweist und insbesondere nachbildet.

Bevorzugt ist vorgesehen, dass dabei zwischen der vorbeifahrenden Rückenfläche der Backplatte und der Induktionsheizung ein Induktorspalt mit konstantem Spaltabstand freigehalten wird.

Bevorzugt ist vorgesehen, dass die Induktionsheizung die Rückenfläche der vorbeifahrenden Backplatte sowohl in einem ersten Bereich als auch in einem zweiten Bereich der Backplatte beheizt, wobei die Dicke der Backplatte, definiert durch den Abstand zwischen Rückenfläche und der äußeren Abschlussebene der Backfläche, im ersten Bereich größer ausgebildet ist als im zweiten Bereich, und wobei die Kontur der Induktionsheizung an diesen Dickenunterschied angepasst ist.

Bevorzugt ist vorgesehen, dass mindestens ein Endlosförderer vorgesehen ist, der, die Backplatten umfassende, Backplattenvorrichtungen durch den Backofen und insbesondere durch folgende Bereiche befördert:
- einen Backmassenauftragsbereich zum Auftrag einer Backmasse auf eine geöffnete Backplattenvorrichtung,
- einen Schließbereich zum Schließen der Backplattenvorrichtung,
- einen Backraum zum Backen der Waffeln in den geschlossenen Backplattenvorrichtungen, in dem mindestens eine Induktionsheizung zur Beheizung der im Backraum befindlichen Backplattenvorrichtungen vorgesehen ist,
- einen Öffenbereich zum Öffnen der Backplattenvorrichtungen,
- und einen Waffelentnahmebereich zur Entnahme der gebackenen Waffeln aus den geöffneten Backplattenvorrichtungen.

Die Rückenfläche der Backplatte weist bevorzugt ein von einer Ebene abweichendes Profil aufweist. Das bedeutet, dass die Rückenfläche nicht ebenenförmig ist, also z.B. eine Stufe oder eine Krümmung aufweist.

Die Induktionsheizung weist bevorzugt eine an diese Rückenfläche angepasste, nichtlineare Kontur auf. Das bedeutet, dass die Kontur der Induktionsheizung, also der Richtung Backplatte weisende Abschluss der Induktionsheizung, an das Profil der Backplatte angepasst ist, sodass bevorzugt ein Induktorspalt gebildet wird, der über seinen Verlauf eine konstante Spaltbreite aufweist. Der Verlauf des Induktorspalts ist aber nicht linear, sondern ergibt sich aus dem freigehaltenen Bereich zwischen der Backplatte und der Induktionsheizung.

Der Spaltabstand ist bevorzugt der Normalabstand zwischen dem Profil der Rückenfläche der Backplatte und der Kontur der Induktionsheizung.

Die Backplattendicke ist bevorzugt der Normalabstand zwischen der Abschlussebene der Backfläche und der Rückenfläche. Die Abschlussebene ist bevorzugt jene gedachte Ebene, mit der die Backplatte bzw. deren Backfläche abschließt. Alternativ kann die Teilungsebene der beiden Backplatten in der Backplattenvorrichtung als Abschlussebene angenommen werden. Gegebenenfalls kann diese Abschlussebene durch Ausbuchtungen zur Bildung von Hohlwaffeln überragt werden. Die Annahme einer Abschlussebene wird dazu verwendet, die Dicke der Backplatte zu definieren. Hierbei sollen aber Ausbuchtungen oder Einbuchtungen zur Bildung der Form des zu backenden Produktes unberücksichtigt bleiben. Die Dicke entspricht bevorzugt dem Normalabstand zwischen Abschlussebene der Backfläche und der Rückenfläche.

An der Backplatte sind gegebenenfalls Elemente einer Spannvorrichtung vorgesehen, die meist in der Rückenfläche versenkt sind. Diese Elemente können bei der Definition der Rückenfläche bzw. deren Profil unberücksichtigt bleiben.

Durch die offenbarten Anordnungen und Backöfen können insbesondere folgende Effekte erzielt werden:
Eine Verbesserung des thermischen Wirkungsgrades von induktiv beheizten Backöfen durch Backplatten mit an den Rändern im Vergleich zur Mitte reduzierter Backplattendicke.

Eine Beschleunigung der Einstellung des thermischen Gleichgewichts im Backprozess bei induktiv beheizten Waffelbacköfen durch Waffelbackplatten mit an den Rändern im Vergleich zur Mitte gesteigerter Backplattendicke.

Eine lokale Steigerung der thermischen Reaktivität auf der Backfläche bei induktiv beheizten Waffelbacköfen durch Waffelbackplatten, bei denen sich die Backplatte aus Bereichen mit reduzierter Backplattendicke (d.h. gesteigerter thermischer Reaktivität) und gesteigerter Backplattendicke (d.h. gesteigerte thermische Speichermasse) zusammensetzt.

Offenbart wird eine induktiv beheizte Backplatte mit einer nicht-ebenenförmigen Rückenfläche und/oder mit Bereichen unterschiedlicher Backplattendicke zur gezielten Beeinflussung der Wärmeströme bzw. der Temperaturgradienten vom Ort der Induktion d.h. der Rückenfläche in andere Bereiche der Backplatte, also z.B. in die Backfläche oder in die Kontaktflächen mit weiteren Komponenten der Backplattenvorrichtung wie Verschluss- und Scharnier-Teile.

Durch die Gestaltung der Rückenfläche kann ein äquidistantes Vorbeifahren an dem korrespondierend positionierten Teil der Induktionsheizung erfolgen. Dies wird z.B. durch die Kombination mehrerer jeweils ebener Bereiche auf der Rückenfläche erreicht oder in einer alternativen Ausführungsform, durch eine Krümmung der Backflächenrückseite, wobei in diesem Fall die korrespondierende Form des Induktors ebenfalls gekrümmt ausgeführt sein kann.

Die Backplatten weisen bevorzugt quer zur Hauptachse Bereiche unterschiedlicher Backplattendicke auf. Diese Bereiche können parallel zur Backfläche ausgeführt und durch entsprechende Stufen, senkrecht oder auch geneigt, miteinander verbunden sein. Die Breite der Bereiche ist so gewählt, dass eine Durchfahrt unter den jeweils korrespondierenden Teilen der Induktionsheizung mit konstantem Normal-Abstand, z.B. 0,5 bis 5 mm, bevorzugt 3-4 mm, zwischen einem jeden Backplattenrückseitenbereich und dem korrespondierenden Induktor gegeben ist. Ebenfalls ist die Ausführung mit Bereichen möglich, die zwar eben aber gegenüber der Backfläche geneigt sind.

Alternativ kann die Rückenfläche der Backplatte auch gekrümmt sein oder mehrere gekrümmte Bereiche enthalten, wobei die korrespondierenden Induktoren gegebenenfalls eine entsprechende Krümmung aufweisen.

Die Rückenfläche der Backplatte besteht gegebenenfalls aus mehreren Bereichen bzw. Zonen die parallel zueinander versetzt, geneigt oder gekrümmt sein können bzw. ist auch eine stetige Krümmung über die gesamte Rückenfläche möglich.

Es kann vorteilhaft sein, wenn die Dicke der Backplatte in einem ersten Bereich größer ausgebildet ist als in einem zweiten Bereich der Backplatte und insbesondere wenn die Kontur der Induktionsheizung an diesen Dickenunterschied angepasst ist.

Der Dickenunterschied beträgt bevorzugt mehr als 1 mm, mehr als 2 mm, bevorzugt mehr als 3 mm. Der Dickenunterschied beträgt gegebenenfalls weniger als 30mm, weniger als 20 mm und insbesondere weniger als 10 mm.

Gemäß einer Ausführungsform beträgt der Spaltabstand 1mm bis 15mm, bevorzugt etwa 3mm bis 7mm.

Die maximale Dicke einer geeigneten Backplatte beträgt, je nach Anwendung, beispielsweise 20 mm bis 100mm, bevorzugt 60 mm bis 90 mm.

Die minimale Dicke einer geeigneten Backplatte beträgt, je nach Anwendung, beispielsweise 10 mm bis 90mm.

Bevorzugt beträgt die minimale Dicke der Backplatte höchstens 10mm weniger als die maximale Dicke der Backplatte.

In weiterer Folge wird die Erfindung anhand von Ausführungsbeispielen weiter beschrieben.
Fig. 1 zeigt eine schematische Schnittdarstellung der Grundkomponenten eines möglichen gattungsgemäßen Backofens.
Fig. 2 zeigt eine schematische Schrägansicht einer möglichen Ausführungsform einer Backplattenvorrichtung.

Die Fig. 3a - 3f zeigen schematische Schnittdarstellungen unterschiedlicher Ausführungsformen einer Anordnung.

Wenn nicht anders angegeben, so entsprechen die Bezugszeichen folgenden Komponenten: Bewegungsrichtung 1, Überdruckbackform 2, Backplatte 3, Backfläche 4, Rückenfläche 5, Induktionsheizung 6, Kontur (der Induktionsheizung) 7, Profil (der Rückenfläche) 8, Hauptachse 9, Induktorspalt 10, Dicke (der Backplatte) 11, äußere Abschlussebene 12, erster Bereich 13, zweiter Bereich 14, Aufnahme (für Verbindungsmittel) 15, Scharnier 16, Verriegelungsvorrichtung 17, Spannvorrichtung 18, Backplattenvorrichtung 19, Endlosförderer 20, Backmassenauftragsbereich 21, Schließbereich 22, Backraum 23, Öffenbereich 24, Waffelentnahmebereich 25, Spaltabstand 26.

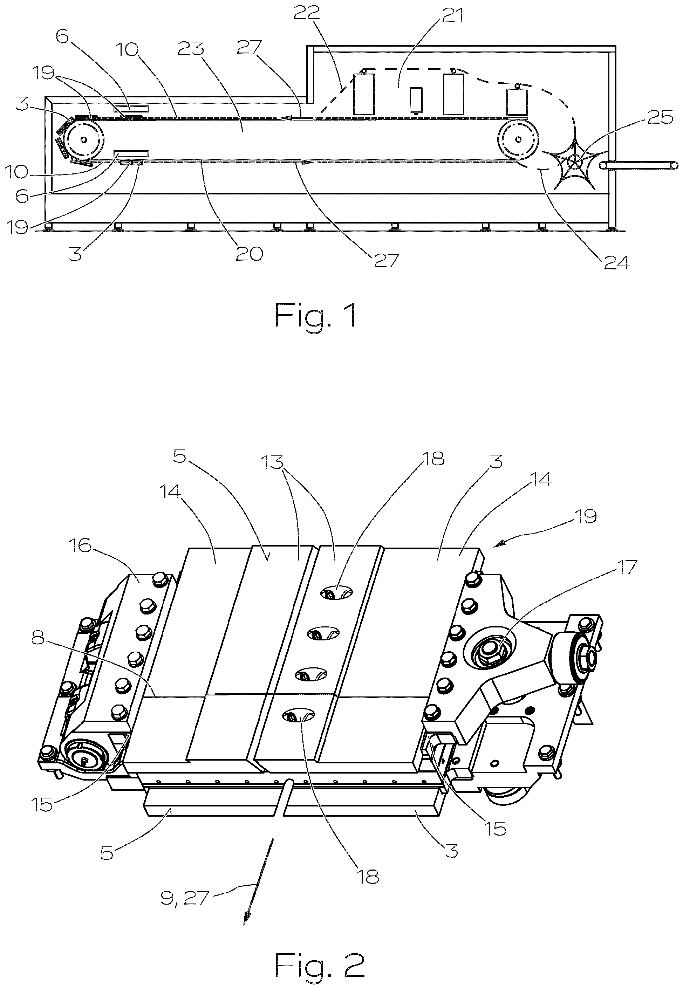

Fig. 1 zeigt eine schematische Schnittdarstellung einer möglichen Ausführungsform eines Backofens zur Herstellung von Waffeln. Bei diesem Backofen sind mehrere Backplattenvorrichtungen 19 vorgesehen. Die Backplattenvorrichtungen 19 sind an einem Endlosförderer 20 angebracht oder anbringbar, wodurch sie entlang einer Bewegungsrichtung 1 durch den Backofen transportiert werden. Insbesondere werden die Backplattenvorrichtungen 19 und deren Backplatten 3 durch einen Backmassenauftragsbereich 21 zum Auftrag einer Backmasse auf die geöffnete Backplattenvorrichtung 19, weiter in einen Schließbereich 22 zum Schließen der Backplattenvorrichtungen 19, weiter durch einen Backraum 23 zum Backen der Waffeln in den geschlossenen Backplattenvorrichtungen 19, weiter in einen Öffenbereich 24 zum Öffnen der Backplattenvorrichtungen 19 und in einen Waffelentnahmebereich 25 zum Entnehmen der gebackenen Waffeln befördert. In weiterer Folge beginnt der Durchlauf erneut.

Im Backraum 23 ist eine Induktionsheizung 6 vorgesehen. Diese Induktionsheizung ist dazu ausgebildet, die Backplatten 3 der Backplattenvorrichtung 19 induktiv zu erwärmen. Die Induktionsheizung 6 ist bevorzugt stillstehend im oder am Backofen angebracht und beheizt die an der Induktionsheizung 6 vorbeifahrenden Backplatten 3. Um dies zu ermöglichen, ist zwischen den vorbeifahrenden Backplatten 3 und der Induktionsheizung 6 ein Induktorspalt 10 freigehalten. Bevorzugt umfasst der Backofen eine mehrteilige Induktionsheizung 6, beispielsweise eine Induktionsheizung 6, die mehrere Heizmodule umfasst. In der vorliegenden Figur sind schematisch zwei Heizmodule der Induktionsheizung 6 dargestellt. Insbesondere ist ein Teil der Induktionsheizung 6 entlang der oberen Transportebene der Backplattenvorrichtungen 19 und ein anderer Teil der Induktionsheizung 6 entlang der unteren Transportebene der Backplattenvorrichtungen 19 vorgesehen. An den Umlenkpunkten des Endlosförderers 20 wird dieser umgelenkt. Bevorzugt werden hier auch die an dem Endlosförderer 20 angebrachten Backplattenvorrichtungen 19 und deren Backplatten gewendet. Dadurch können die Abschnitte der Induktionsheizung 6 immer von oben auf die Backplattenvorrichtungen 19 wirken und dennoch werden, durch das Wenden der Backplattenvorrichtungen 19 bei den Umlenkpunkten, beide Backplatten 3 der Backplattenvorrichtung 19 beheizt. Alternativ oder zusätzlich können Teile der Induktionsheizung 6 von unten auf die vorbeifahrenden Backplattenvorrichtungen 19 wirken.

Die Induktionsheizung 6 und die Backplatten 3 der Backplattenvorrichtungen 19 können dabei als Anordnung bzw. als System angesehen werden. Insbesondere müssen die Backplatten 3 und die Induktionsheizung 6 aufeinander abgestimmt sein, sodass der Induktorspalt 10 die gewünschte Form aufweist.

Die Anordnung aus Induktionsheizung 6 und Backplatten 3 kann beispielsweise ein Nachrüstsatz sein, der bei einem Backofen, eine bestehende Anordnung aus Heizung und Backplatte ersetzt. Dadurch kann die Effizienz eines Backofens verbessert werden. Grundsätzlich kann die Anordnung aber auch von Anfang an in den Backofen eingebaut sein.

In allen Ausführungsformen ist bevorzugt vorgesehen, dass im Backmassenauftragsbereich 21 ein Aufgießer zum Aufgießen einer flüssigen bzw. flüssig bis pastösen Backmasse angeordnet ist. Die Backmasse ist bevorzugt eine Waffelbackmasse.

Bevorzugt ist die Backplattenvorrichtung 19 derart ausgebildet, dass sie eine Überdruckbackform 2 bilden kann.

**Fig. 2** zeigt eine schematische Schrägansicht einer möglichen Ausführungsform einer Backplattenvorrichtung 19.

Die Backplattenvorrichtung 19 umfasst zwei Backplatten 3, insbesondere eine obere Backplatte 3 und eine untere Backplatte 3. Die Backplatten 3 umfassen jeweils eine außenliegende Rückenfläche 5. Auf der gegenüberliegenden Seite der Backplatte 3 ist jeweils eine Backfläche 4 vorgesehen, die in der geschlossenen Stellung der Backplattenvorrichtung 19 nicht sichtbar ist. Wenn die Backplatten 3 einer Backplattenvorrichtung 19 geschlossen und verriegelt sind, ist zwischen den Backplatten 3 eine ebenfalls nicht sichtbare Überdruckbackform 2 gebildet. Der Überdruck ergibt sich durch den eingangs beschriebenen Backprozess.

Die Backplatten 3 umfassen bevorzugt Aufnahmen 15 für Verbindungsmittel zur Bildung der Backplattenvorrichtung 19. Im vorliegenden Fall ist hierfür ein Scharnier 16 und eine Verriegelungsvorrichtung 17 vorgesehen. Über das Scharnier 16 kann die Backplattenvorrichtung 19 auf- und zugeklappt werden. Über die Verriegelungsvorrichtung 17 kann die Backplattenvorrichtung 19 in ihrem geschlossenen Zustand verriegelt werden. Alternativ kann beispielsweise eine Parallelführung der Backplatten 3 einer Backplattenvorrichtung 19 vorgesehen sein, wobei hier ein Scharnier 16 entfällt, jedoch bevorzugt mindestens eine Verriegelungsvorrichtung 17 vorgesehen ist.

Weitere Komponenten einer Backplattenvorrichtung 19, wie beispielsweise Verbindungsmittel zur Verbindung mit dem Endlosförderer oder Rollen zur Bildung eines Backzangenwagens, können herkömmlich ausgestaltet sein.

Die obenliegende Backplatte 3 und bevorzugt auch die untenliegende Backplatte 3 umfasst eine Rückenfläche 5, deren Profil 8 von der Form einer Ebene abweicht. Die Form des Profils 8 ist schematisch durch eine eingezeichnete Linie dargestellt. Insbesondere wird das Profil 8 durch die äußere Kontur der Rückenfläche 5 der Backplatte 3 bestimmt. Die betrachtete Kontur liegt dabei in einer Normalebene der Hauptachse 9 der Backplatte 3 bzw. der Backplattenvorrichtung 19. Die Hauptachse 9 entspricht jener Achse, entlang derer auch die Bewegungsachse 1 in einem Backofen verläuft. In der vorliegenden Ausführungsform ist das Profil stufenförmig ausgebildet. Dadurch sind ein erster Bereich 13 und ein zweiter Bereich 14 gebildet. Insbesondere ist die Backplatte 3 im ersten Bereich 13 dicker ausgebildet als im zweiten Bereich 14. Jedoch kann das Profil 8, je nach gewünschtem Effekt, auch andersförmig ausgebildet sein, wie in den nachfolgenden Figuren beispielhaft beschrieben wird.

Die Backplattenvorrichtung ist bevorzugt in allen Ausführungsformen als selbsttragende Backplattenvorrichtung ausgebildet. Die Backplatten 3 dienen dabei auch der Verbindung der beiden seitlichen Verbindungsmittel, im vorliegenden Fall also dem Scharnier 16 mit der Verriegelungsvorrichtung 17. Die Backplatten 3 bilden somit ein tragendes Element der Struktur der Backplattenvorrichtung 19. Ein Tragrahmen für die Backplatten 3 kann bei einer selbsttragenden Backplattenvorrichtung entfallen. Selbsttragende Backplattenvorrichtungen 19 sind in der Regel rahmenlos ausgebildet. Hierzu ist es vorteilhaft, wenn die Backplattenvorrichtungen 19 und insbesondere deren Backplatten 3 eine Spannvorrichtung 18 umfassen, mit der die Backplatte 3 gegen den in der Überdruckbackform 2 entstehenden Überdruck vorspannbar sind. In der vorliegenden Ausführungsform ist hierzu in der Rückenfläche der Backplatte 3 eine Nut ausgenommen, die über mehrere Stellschrauben zusammengezogen werden kann. Hierdurch kann die Backplatte Richtung Überdruckbackform 2 vorgespannt bzw. gegebenenfalls vorgewölbt werden. Diese Elemente können bei der Definition der Rückenfläche 5 bzw. deren Profil 8 unberücksichtigt bleiben.

Insbesondere kann die Backplattenvorrichtung 19 in allen Ausführungsformen eine herkömmliche Backplattenvorrichtung 19 sein, die jedoch eine Backplatte 3 umfasst, deren Rückenfläche 5 ein spezielles Profil 8 aufweist.

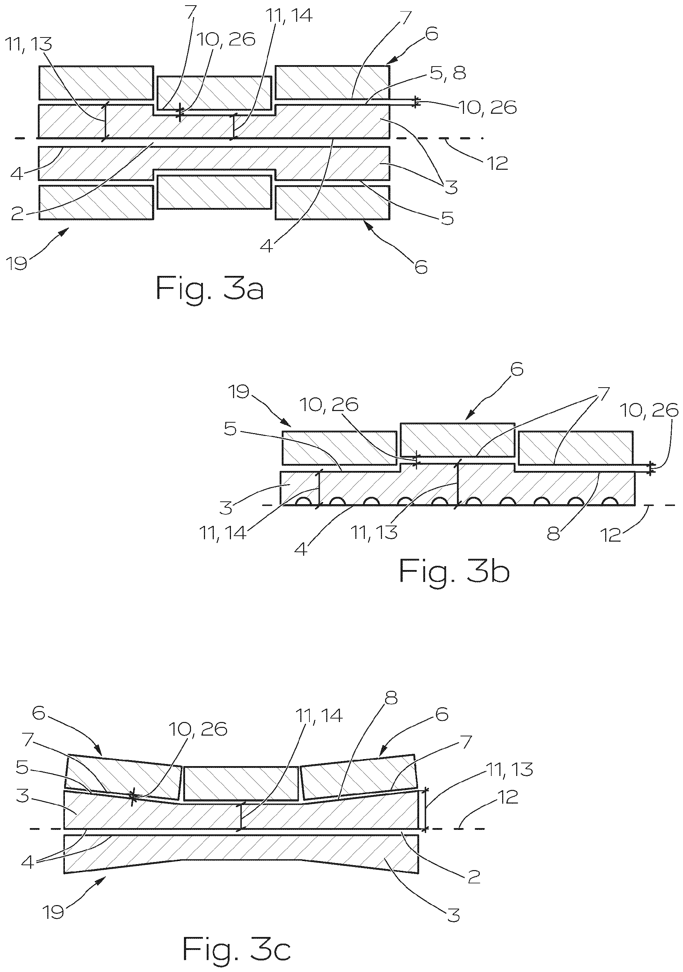

Die **Fig. 3a** - **3f** zeigen unterschiedliche Konzepte von Anordnungen in schematischen Schnittdarstellungen, wobei die Blickrichtung der Hauptachse 9 folgt.

**Fig. 3a** zeigt eine Anordnung mit zwei Backplatten 3 und einer Induktionsheizung 6. Die Backplatte 3 umfasst eine Backfläche 4 und eine Rückenfläche. Die Backfläche 4 bildet einen Teil der Überdruckbackform 2, wenn die Backplattenvorrichtung 19 geschlossen ist. Die Backfläche 4 ist also jene Fläche der Backplatte 3, die während des Backvorgangs dem Teig und in weitere Folge dem zu backenden Backprodukt zugewandt ist. Auf der gegenüberliegenden Seite der Backplatte 3 ist die Rückenfläche 5 vorgesehen. Die Rückenfläche 5 ist der Induktionsheizung 6 zugewandt. Bei bestimmungsgemäßer Verwendung fahren die Backplatten 3 an der Induktionsheizung 6 vorbei. Zwischen der Induktionsheizung 6 und der Backplatte 3 ist ein Induktionsspalt 10 freigehalten. Der Induktionsspalt 10 hat einen Spaltabstand 26. Die Rückenfläche 5 der Backplatte 3 weist ein Profil 8 auf. Dieses Profil 8 ist bevorzugt entlang der gesamten Erstreckung der Hauptachse 9 konstant, also unverändert. Das Profil der Rückenfläche 5 weicht von einer ebenen Form ab. Insbesondere ist das Profil 8 in der vorliegenden Ausführungsform abgestuft bzw. wannenförmig ausgebildet. Die Induktionsheizung 6 weist eine Kontur 7 auf. Die Kontur 7 der Induktionsheizung 6 weist einen Verlauf auf, der dem Verlauf des Profils 8 angepasst ist. Insbesondere ist der Spaltabstand 26 über den gesamten Verlauf des Induktorspalts 10 konstant. In allen Ausführungsformen kann bevorzugt vorgesehen sein, dass die Kontur 7 der Induktionsheizung 6 im Wesentlichen einer Negativform des Profils 8 entspricht.

Bevorzugt weist jede Backplatte 3 eine Abschlussebene 12 auf. Diese Abschlussebene 12 ist beispielsweise die Teilungsebene der beiden Backplatten 3 in der Backplattenvorrichtung 19 bzw. jene Ebene, mit der der Grundkörper der Backplatte 3 abschließt. Gegebenenfalls kann diese Abschlussebene 12 durch Ausbuchtungen zur Bildung von Hohlwaffeln überragt werden. Die Annahme einer Abschlussebene 12 wird dazu verwendet, die Dicke 11 der Backplatte zu definieren. Hierbei sollen aber Ausbuchtungen oder Einbuchtungen zur Bildung der Form des zu backenden Produktes unberücksichtigt bleiben. Die Dicke 11 entspricht daher dem Normalabstand zwischen Abschlussebene 12 der Backfläche 4 und der Rückenfläche 5.

Die Backplatte 3 hat in der vorliegenden Ausführungsform einen ersten Bereich 13 und einen zweiten Bereich 14. Die Dicke 11 der Backplatte 3 ist im ersten Bereich 13 größer ausgebildet als im zweiten Bereich 14. In der vorliegenden Ausführungsform sind die dickeren Bereiche, also die ersten Bereiche 13, im Randbereich der Backplatten 3 vorgesehen. Der dünnere, zweite Bereich 24 verläuft mittig, zwischen den beiden ersten Bereichen 13. Dadurch wird in diesem Randbereich eine höhere Speichermasse für Wärme gebildet. Diese höhere Speichermasse erlaubt es, den Wärmetransport bzw. den Wärmeverlust über die in Fig. 2 dargestellten Verbindungsmittel gering zu halten bzw. auszugleichen.

In allen Ausführungsformen kann die Induktionsheizung 6 mehrere Induktionsmodule aufweisen. In der vorliegenden Ausführungsform sind pro Backplatte 3 im dargestellten Bereich drei Module vorgesehen. Die Induktionsheizung hat in der vereinfachten Darstellung der Fig. 3a also eine Kontur 7, die durch drei Module der Induktionsheizung 6 definiert wird und eine weitere Kontur 7 für die andere Backplatte 3, bei der ebenfalls drei Module die Kontur 7 der Induktionsheizung 6 definieren. Alternativ können mehr oder weniger Module vorgesehen sein. Beispielsweise kann für eine Backplatte 3 lediglich ein Modul vorgesehen sein, in dem die Induktionswicklungen so gelegt sind, dass das Modul eine abgestufte bzw. von einer Ebene abweichende Kontur 7 aufweist.

**Fig. 3b** zeigt eine weitere mögliche Ausführungsform, wobei die Komponenten jenen Komponenten aus Fig. 3a entsprechen. Bei Fig. 3b ist die Backplatte 3 eine Backplatte zur Herstellung von Hohlwaffeln. Die äußere Abschlussebene 12 ist durch den Abschluss der Backplatte 3 im Bereich der Backfläche 4 definiert. Die Rückenfläche 5 weist ein Profil 8 auf, dessen Verlauf von dem Verlauf einer Ebene abweicht. Insbesondere sind bei der vorliegenden Ausführungsform der Fig. 3b die Randbereiche der Backplatte 3 dünner ausgeführt und weisen dadurch eine geringere Dicke 11 auf als der Mittenbereich. Hierdurch ist, der zuvor getroffenen Definition folgend, ein erster Bereich 13 im Mittenbereich und ein zweiter Bereich 14 im Randbereich der Backplatte 3 vorgesehen.

Durch die dünner ausgebildeten Randbereiche der Backplatte 3 ist dieser Bereich reaktiver und kann schneller aufgeheizt werden. Der Mittenbereich mit erhöhter Dicke weist eine größere thermische Speichermasse auf. Dadurch kann beispielsweise eine dauerhafte Beheizung der Backplatten 3 während des Regelbetriebs mit weniger Energie erfolgen, weil die erhöhte Speicherfähigkeit der Backplatte 3 im Mittenbereich die Kühlung durch die aufgegossene Backmasse kompensieren kann.

**Fig. 3c** zeigt eine weitere Ausführungsform einer Anordnung. Hierbei sind zwei Backplatten 3 vorgesehen und eine Induktionsheizung 6. Die Induktionsheizung 6 ist zur Beheizung einer der Backplatten 3 der Backplattenvorrichtung 19 eingerichtet. Die Induktionsheizung 6 kann in einem anderen Bereich eines Backofens auch einen Teil haben, der die andere Backplatte 3 aufheizt. Die Backplatte 3 weist eine Rückenfläche 5 mit einem Profil 8 auf. Dieses Profil 8 weicht von einer ebenen Form ab. Insbesondere ist es wannenförmig ausgebildet. Im Gegensatz zur stufenförmigen Ausbildung der möglichen Ausführungsformen gemäß Fig. 3a und Fig. 3b weist das Profil 8 der Rückenfläche 5 der Backplatte 3 einen abgeschrägten Bereich auf. Auch in dieser Ausführungsform weist der Mittenbereich der Backplatte eine geringere Dicke 11 auf als der Randbereich.

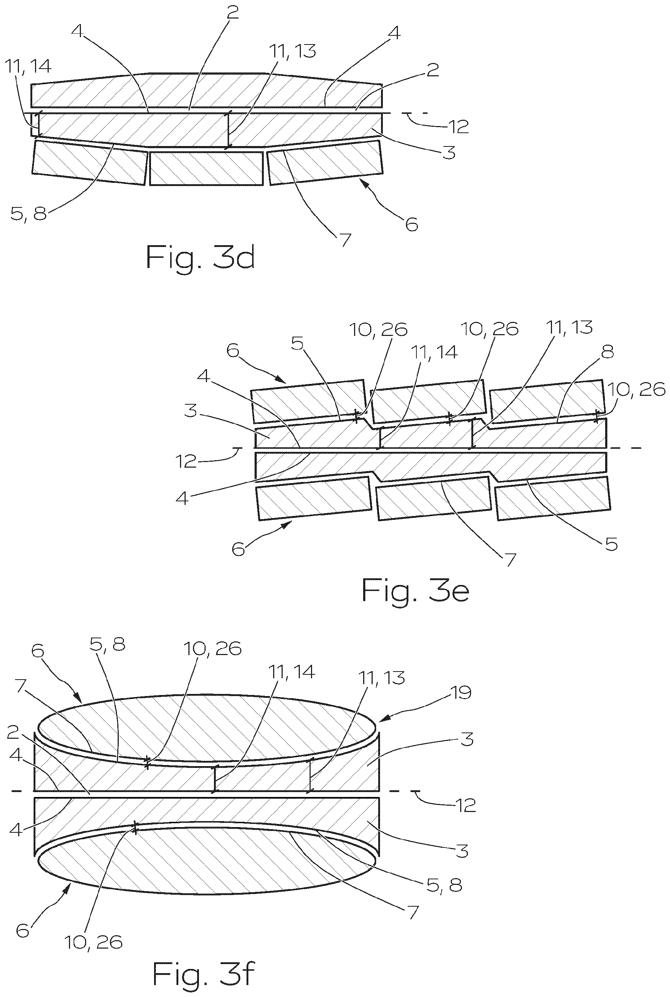

Eine gegenteilige Ausgestaltung ist in **Fig. 3d** dargestellt. Dort wird durch die Induktionsheizung 6 in der Darstellung beispielhaft die untere Backplatte 3 beheizt. Der schräge Verlauf des Profils 8 der Rückenfläche 5 der Backplatte 3 ist so ausgebildet, dass die Dicke 11 der Backplatte 3 im Randbereich kleiner ist als im Mittenbereich.

**Fig. 3e** zeigt eine Ausführungsform, bei der das Profil 8 der Rückenfläche 5 einer Backplatte 3 sägezahn- bzw. zickzackförmig ausgebildet ist. Durch eine derartige Ausgestaltung kann beispielsweise die Oberfläche der Rückenfläche 5 gegenüber einer planen Fläche erhöht werden. Eine Schrägstellung der Induktionsheizung 6 kann dadurch eine Verbesserung der Effizienz des Backofens bewirken.

**Fig. 3f** zeigt eine Ausgestaltung, bei der das Profil 8 der Rückenfläche 5 wannenförmig ausgebildet ist, wobei das Profil abgerundet bzw. verlaufend ausgebildet ist. Auch die Kontur 7 der Induktionsheizung 6 ist an diesen Verlauf des Profils 8 angepasst.

In allen Ausführungsformen der Fig. 3a-3f ist bevorzugt vorgesehen, dass die Induktionsheizung eine an die Rückenfläche 5 angepasste, dem Verlauf des Profils 8 folgende nicht lineare Kontur 7 aufweist. Zwischen der Rückenfläche 5 der Backplatte 3 und der Kontur 7 der Induktionsheizung ist bevorzugt ein Induktorspalt 10 freigehalten, der einen konstanten Spaltabstand 26 aufweist. Dies bedeutet insbesondere, dass bei dem Induktorspalt 10 zwischen der Induktionsheizung 6 und dem durch diesen Teil der Induktionsheizung 6 aufgeheiztem Teil der Backplatte 3 immer derselbe Abstand herrscht. Bereiche zwischen Modulen einer Induktionsheizung können vernachlässigt werden.

## Patentansprüche

1. **Anordnung** für einen Backofen zur Herstellung von Waffeln in beheizten und an einem Endlosförderer (20) entlang einer Bewegungsrichtung (1) durch den Backofen beförderten Überdruckbackformen (2), umfassend:
- mindestens eine Backplatte (3), die auf einer ihrer Seiten eine Backfläche (4) zur Begrenzung einer der Überdruckbackformen und auf ihrer gegenüberliegenden Seite eine Rückenfläche (5) aufweist,
- und eine Induktionsheizung (6) mit mindestens einem Heizmodul zur Beheizung einer vorbeifahrenden Backplatte (3) über ihre Rückenfläche (5),
**dadurch gekennzeichnet,**
- **dass** die Rückenfläche (5) der Backplatte (3) ein von einer Ebene abweichendes Profil (8) aufweist,
- **dass** die Induktionsheizung (6) eine an diese Rückenfläche (5) angepasste, dem Verlauf des Profils (8) folgende, nichtlineare Kontur (7) aufweist und insbesondere nachbildet,
- und **dass** das Profil (8) der Rückenfläche (5) der Backplatte (3) und die Kontur (7) der Induktionsheizung (6) derart ausgestaltet sind, dass, im eingebauten Zustand, zwischen der vorbeifahrenden Rückenfläche (5) der Backplatte (3) und der Induktionsheizung (6) ein Induktorspalt (10) mit konstantem Spaltabstand (26) freigehalten ist.

2. Anordnung nach Anspruch 1, **dadurch gekennzeichnet, dass** an der Backplatte (3) eine Hauptachse (9) definiert ist, die der Bewegungsrichtung (1) der Backform durch den Backofen entspricht, und dass das Profil (8) der Rückenfläche (5) der Backplatte (3) in einer Normalebene dieser Hauptachse (9) liegt.

3. Anordnung nach Anspruch 1 oder 2, **dadurch gekennzeichnet, dass** das Profil (8) der Rückenfläche (5) der Backplatte (3) im Verlauf der Backplatte (3) entlang der Hauptachse (9) konstant ist.

4. Anordnung nach einem der Ansprüche 1 bis 3, **dadurch gekennzeichnet, dass** der Induktorspalt (10) einen nichtlinearen Verlauf hat.

5. Anordnung nach einem der Ansprüche 1 bis 4, **dadurch gekennzeichnet,**
- **dass** die Rückenfläche (5) der Backplatte (3) ein sägezahnförmiges Profil (8) aufweist,
- oder dass die Rückenfläche (5) der Backplatte (3) ein abgestuftes Profil (8) aufweist,
- oder dass die Rückenfläche (5) der Backplatte (3) ein wannenförmiges Profil (8) aufweist,
- oder dass die Rückenfläche (5) der Backplatte (3) ein aufgewölbtes Profil (8) aufweist,
- oder dass die Rückenfläche (5) der Backplatte (3) ein wellenförmiges Profil (8) aufweist.

6. Anordnung nach einem der Ansprüche 1 bis 5, **dadurch gekennzeichnet,**
- **dass** die Dicke (11) der Backplatte (3), definiert durch den Abstand zwischen Rückenfläche (5) und der äußeren Abschlussebene (12) der Backfläche (4), in einem ersten Bereich (13) größer ausgebildet ist als in einem zweiten Bereich (14) der Backplatte (3),
- **dass** die Kontur (7) der Induktionsheizung (6) an diesen Dickenunterschied angepasst ist,
- und **dass** die Induktionsheizung (6) derart ausgestaltet ist, dass sie, im eingebauten Zustand, die Rückenfläche (5) der vorbeifahrenden Backplatte (3) sowohl im ersten Bereich (13) als auch im zweiten Bereich (14) beheizt.

7. Anordnung nach Anspruch 6, **dadurch gekennzeichnet,**
- **dass** ein erster Bereich (13) im Randbereich vorgesehen ist, womit die Backplatte (3) im Randbereich dicker ausgebildet ist als im Mittenbereich,
- oder dass ein erster Bereich (13) im Mittenbereich vorgesehen ist, womit die Backplatte (3) im Mittenbereich dicker ausgebildet ist als im Randbereich.

8. Anordnung nach einem der Ansprüche 1 bis 7, **dadurch gekennzeichnet,**
- **dass** die Backplatte (3) als selbsttragende Backplatte ausgebildet ist, die in ihren seitlichen Endabschnitten Aufnahmen (15) zur Montage von Verbindungsmitteln wie beispielsweise für ein Scharnier (16) oder für eine Verriegelungsvorrichtung (17) aufweist
- wobei die Backplatte (3) bevorzugt rahmenlos ausgebildet ist.

9. Anordnung nach einem der Ansprüche 1 bis 8, **dadurch gekennzeichnet, dass** die Backplatte (3) eine Spannvorrichtung (18) zur Vorspannung der Backplatte (3) gegen die von der Überdruckbackform ausgehenden Druckkräfte umfasst.

10. Anordnung nach einem der vorangegangenen Ansprüche, die als **Nachrüstsatz** für einen Backofen zur Herstellung von Waffeln in beheizten und an einem Endlosförderer (20) durch den Backofen beförderten Überdruckbackformen ausgebildet ist, wobei der Nachrüstsatz zum Ersatz mindestens einer Backplatte (3) und mindestens einer Induktionsheizung (26) ausgebildet ist.

11. **Backofen** zur Herstellung von Waffeln,
- wobei mehrere Backplattenvorrichtungen (19) vorgesehen sind, die jeweils ein Paar von Backplatten (3) zur Bildung einer Überdruckbackform aufweisen,
- wobei die Backplatten (3) jeweils auf einer ihrer Seiten eine Backfläche (4) zur Begrenzung der Überdruckbackform und auf ihrer gegenüberliegenden Seite eine Rückenfläche (5) aufweisen,
- wobei mindestens ein Endlosförderer (20) vorgesehen ist, der die Backplattenvorrichtungen (19) durch den Backofen befördert,
- und wobei eine Induktionsheizung (6) zur Beheizung der Rückenfläche (5) der vorbeifahrenden Backplatten (3) vorgesehen ist,
**dadurch gekennzeichnet,**
- **dass** die Backplatten (3) und die Induktionsheizung (6) als Anordnung gemäß einem der Ansprüche 1 bis 10 ausgebildet sind.

12. Backofen nach Anspruch 11 umfassend:
- einen Backmassenauftragsbereich (21) zum Auftrag einer Backmasse auf eine geöffnete Backplattenvorrichtung (19),
- einen Schließbereich (22) zum Schließen der Backplattenvorrichtung (19),
- einen Backraum (23) zum Backen der Waffeln in den geschlossenen Backplattenvorrichtungen (19), in dem mindestens eine Induktionsheizung (6) zur Beheizung der im Backraum (23) befindlichen Backplattenvorrichtungen (19) vorgesehen ist,
- einen Öffenbereich (24) zum Öffnen der Backplattenvorrichtungen (19),
- und einen Waffelentnahmebereich (25) zur Entnahme der gebackenen Waffeln aus den geöffneten Backplattenvorrichtungen (19).

13. **Verfahren** zur Herstellung von Waffeln mit einer Anordnung gemäß einem der Ansprüche 1 bis 10 und insbesondere in einem Backofen zur Herstellung von Waffeln in beheizten und an einem Endlosförderer (20) entlang einer Bewegungsrichtung (1) durch den Backofen beförderten Überdruckbackformen (2) nach einem der Ansprüche 11 oder 12:
- wobei eine Induktionsheizung (6) mit mindestens einem Heizmodul eine vorbeifahrende Backplatte (3) beheizt,
- wobei die Backplatte (3) auf einer ihrer Seiten eine Backfläche (5) zur Begrenzung einer der Überdruckbackformen und auf ihrer gegenüberliegenden Seite eine Rückenfläche (5) aufweist,
- wobei die Backplatte (3) von der Induktionsheizung (6) über ihre Rückenfläche (5) beheizt wird,
**dadurch gekennzeichnet,**
- **dass** die induktive Beheizung über eine Rückenfläche (5) der Backplatte (3) erfolgt, die ein von einer Ebene abweichendes Profil (8) aufweist,
- **dass** die induktive Beheizung über eine Induktionsheizung (6) erfolgt, die eine an diese Rückenfläche (5) angepasste, dem Verlauf des Profils (8) folgende, nichtlineare Kontur (7) aufweist und insbesondere nachbildet,
- und **dass** dabei zwischen der vorbeifahrenden Rückenfläche (5) der Backplatte (3) und der Induktionsheizung (6) ein Induktorspalt (10) mit konstantem Spaltabstand (26) freigehalten wird.

14. Verfahren nach Anspruch 13, **dadurch gekennzeichnet,**
- **dass** die Induktionsheizung (6) die Rückenfläche (5) der vorbeifahrenden Backplatte (3) sowohl in einem ersten Bereich (13) als auch in einem zweiten Bereich (14) der Backplatte (3) beheizt, wobei die Dicke (11) der Backplatte (3), definiert durch den Abstand zwischen Rückenfläche (5) und der äußeren Abschlussebene (12) der Backfläche (4), im ersten Bereich (13) größer ausgebildet ist als im zweiten Bereich (14), und wobei die Kontur (7) der Induktionsheizung (6) an diesen Dickenunterschied angepasst ist.

15. Verfahren nach Anspruch 13 oder 14, **dadurch gekennzeichnet, dass** mindestens ein Endlosförderer (20) vorgesehen ist, der die Backplatten (3) umfassende Backplattenvorrichtungen (19) durch den Backofen und insbesondere durch folgende Bereiche befördert:
- einen Backmassenauftragsbereich (21) zum Auftrag einer Backmasse auf eine geöffnete Backplattenvorrichtung (19),
- einen Schließbereich (22) zum Schließen der Backplattenvorrichtung (19),
- einen Backraum (23) zum Backen der Waffeln in den geschlossenen Backplattenvorrichtungen (19), in dem mindestens eine Induktionsheizung (6) zur Beheizung der im Backraum (23) befindlichen Backplattenvorrichtungen (19) vorgesehen ist,
- einen Öffenbereich (24) zum Öffnen der Backplattenvorrichtungen (19),
- und einen Waffelentnahmebereich (25) zur Entnahme der gebackenen Waffeln aus den geöffneten Backplattenvorrichtungen (19).
